Europäisches Patentamt

European Patent Office

Office européen des brevets

(19)

(11) **EP 0 820 139 A2**

(12) **DEMANDE DE BREVET EUROPEEN**

(43) Date de publication:
21.01.1998 Bulletin 1998/04

(51) Int. Cl.$^6$: **H02J 9/06**

(21) Numéro de dépôt: 97111633.0

(22) Date de dépôt: 09.07.1997

(84) Etats contractants désignés:
AT BE CH DE DK ES FI FR GB GR IE IT LI LU MC NL PT SE

(30) Priorité: 16.07.1996 FR 9608870

(71) Demandeur: ASULAB S.A.
CH-2501 Bienne (CH)

(72) Inventeurs:
• Farine, Pierre-André
2003 Neuchâtel (CH)

• Saurer, Eric
2022 Bevaix (CH)
• Dinger, Rudolf
2024 St-Aubin (CH)

(74) Mandataire:
Balsters, Robert et al
I C B,
Ingénieurs Conseils en Brevets S.A.,
7, rue des Sors
2074 Marin (CH)

(54) **Circuit d'alimentation électrique continue régulée par un convertisseur réversible**

(57)    Le domaine de l'invention et la protection contre les défaillances d'alimentation, notamment de circuits électroniques de pièces d'horlogerie dont la source de puissance électrique est une pile photovoltaïque.

L'invention prévoit une alimentation électrique continue comportant :

- une source électrique (G) continue couplée à une sortie d'alimentation (VDD, GND);
- des moyens (4) de stockage d'énergie; et
- un convertisseur (5) électrique continu-continu réversible couplé d'une part à la sortie d'alimentation (VDD, GND), d'autre part aux moyens (4) de stockage d'énergie; le convertisseur (5) comportant des moyens (T1, T2, T3, T4) de commutation modifiant sa configuration.

Selon l'invention, les moyens (4) de stockage de l'alimentation comportent essentiellement un condensateur (C).

De préférence, le convertisseur (5) réversible est un convertisseur tension continue (V1)-tension continue (V2), le convertisseur étant élévateur de tension dans la première configuration, et abaisseur de tension dans la seconde configuration.

Fig.1

EP 0 820 139 A2

**Description**

La présente invention concerne de façon générale le domaine des circuits d'alimentation électrique continue, notamment des pièces d'horlogerie.

Certaines pièces d'horlogerie comportent en effet une cellule solaire, ou autre source électrique intermittente, qui fournit l'énergie électrique nécessaire à un mouvement électrique et/ou à des circuits électroniques, par exemple, de régulation du mouvement. Malheureusement, lorsque la pièce d'horlogerie n'est plus éclairée, la cellule photovoltaïque ne fournit plus d'électricité. Pour éviter d'interrompre le mouvement ou le fonctionnement du circuit électronique, il faut prévoir un dispositif de stockage d'énergie, tel qu'un condensateur, qui est branché entre la cellule solaire et le circuit/mouvement en question pour stocker l'énergie fournie par la cellule solaire lorsque celle-ci en produit. Ce dispositif de stockage d'énergie est ensuite utilisé comme source d'alimentation directe du circuit/mouvement.

Or, la tension d'alimentation requise pour faire fonctionner de nombreux circuits/mouvements est souvent très basse. Ceci est particulièrement le cas dans les circuits à basse puissance dans le domaine de l'horlogerie. Étant donné que la quantité d'énergie E qui peut être stockée à travers un tel dispositif de stockage d'énergie est une fonction de la tension d'alimentation U qu'elle fournit (pour un condensateur, par exemple, cette fonction est donné par la formule $E = 1/2.C.U^2$ où C est la capacité du condensateur), cette quantité d'énergie stockée est limitée. Par conséquent, le fonctionnement du circuit/mouvement peut être assuré seulement pendant une période réduite après la fin de l'éclairement de la cellule solaire.

Pour résoudre ces inconvénients, on pourrait prévoir d'ajouter une alimentation de secours dans un tel circuit d'alimentation. Cette alimentation de secours peut être réalisée par une pile électrique ou même par un stockage d'énergie dans un accumulateur électrochimique, telle qu'une batterie au nickel-cadmium (Ni-Cd), et pourrait servir comme source d'alimentation dans le cas où l'énergie stockée par une source de stockage d'énergie serait épuisée. Cependant ces composants ont l'inconvénient d'être encombrants et d'avoir une durée de vie limitée.

Un but de la présente invention est de fournir un circuit d'alimentation électrique continue qui remédie, tout au moins en partie, à ces inconvénients.

Un autre but de l'invention est de réaliser un circuit d'alimentation électrique continue ayant un encombrement minimal.

L'invention a également comme but de fournir un circuit d'alimentation électrique continue qui permet une grande autonomie de l'alimentation.

Un autre but de l'invention est aussi de prévoir un circuit d'alimentation électrique continue qui est simple et qui nécessite un nombre réduit de composants pour sa réalisation.

Enfin, l'invention a pour but de fournir un dispositif d'alimentation miniature bien adapté à des applications horlogères.

L'invention a ainsi pour objet un circuit d'alimentation continue, notamment pour une pièce d'horlogerie, comportant une source d'alimentation dudit circuit électronique destinée à stocker de l'énergie pour alimenter ce dernier; et une source électrique intermittente destinée à fournir de l'énergie à ladite source d'alimentation. Le circuit d'alimentation est caractérisé en ce qu'il comprend en outre des moyens de stockage d'énergie de réserve destinés à fournir de l'énergie à ladite source d'alimentation lorsque ladite source électrique continue ne fournit pas de l'énergie à ladite source d'alimentation; et un convertisseur électrique continu-continu réversible, couplé d'une part à ladite source d'alimentation, d'autre part aux moyens de stockage d'énergie de réserve, le convertisseur comportant des moyens de commutation modifiant sa configuration entre une première configuration dans laquelle le convertisseur transfère, en sens direct, de l'énergie provenant de la source électrique continue aux moyens de stockage d'énergie de réserve, et une deuxième configuration dans laquelle le convertisseur restitue, en sens inverse, l'énergie stockée par les moyens de stockage d'énergie de réserve à ladite source d'alimentation.

Un tel convertisseur permet en effet de recharger des moyens de stockage d'énergie de réserve sous une tension élevée. En cas de défaillance de l'alimentation, le convertisseur réversible restitue au circuit d'alimentation cette énergie. De préférence, l'énergie est restituée sous la tension d'alimentation $V_{DD}$ normale qui a une valeur faible par rapport à la tension de charge U. Cette disposition permet d'alimenter des circuits électroniques ou des moteurs à faible consommation, ce qui accroît d'autant plus l'autonomie de la pièce d'horlogerie.

L'invention est réalisée de préférence avec un convertisseur réversible tension continue-tension continue, le convertisseur étant élévateur de tension dans la première configuration, et abaisseur de tension dans la seconde configuration.

D'autres caractéristiques et avantages de la présente invention apparaîtront à la lecture de la description et des dessins qui vont suivre, donnés surtout à titre d'exemples non-limitatifs, dans lesquels :

-   la figure 1 représente un circuit d'alimentation électrique continue selon l'invention comportant un convertisseur continu-continu réversible, couplé à un condensateur;
-   la figure 2 représente un schéma d'une partie du circuit d'alimentation électrique continue de la figure 1 lorsque ce dernier est en régime normal de charge;
-   la figure 3 représente un schéma d'une partie du circuit d'alimentation électrique continue de la figure 1 lorsque ce dernier est en régime de secours;
- la figure 4 représente un autre mode de réalisation du circuit d'alimentation électrique continue selon l'invention;
- la figure 5 représente un schéma du circuit d'alimentation électrique continue de la figure 4, et
- la figure 6 représente encore un autre mode de réalisation du circuit d'alimentation électrique continue selon l'invention.

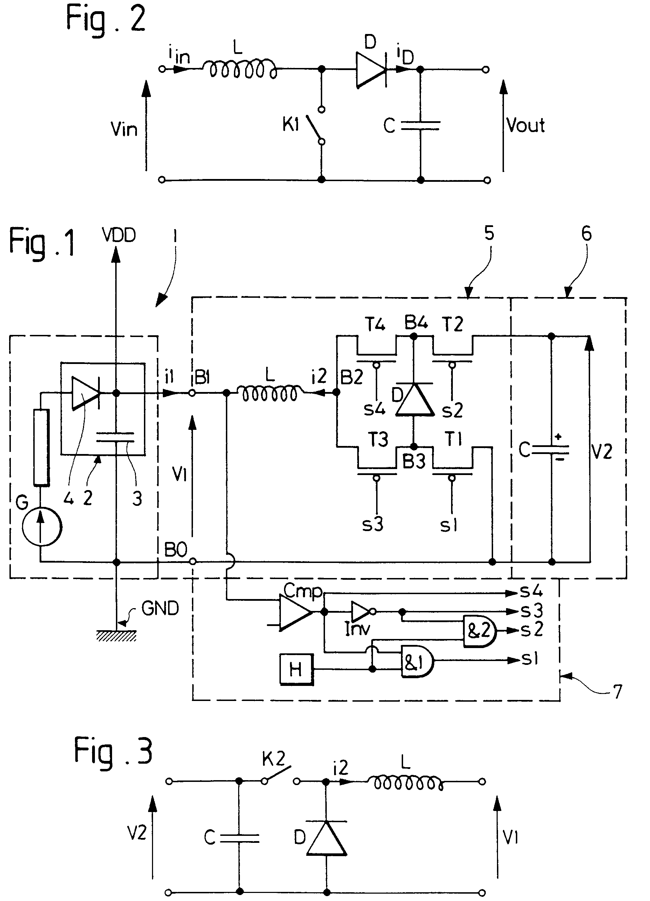

Dans sa forme d'exécution représentée schématiquement et à titre d'exemple non-limitatif à la figure 1, le circuit d'alimentation continue 1 fournit normalement une tension continue entre les bornes d'alimentation $V_{DD}$ et GND, la référence de tension étant conventionnellement prise sur la borne GND, reliée à la masse.

Le circuit d'alimentation continue 1 comporte une source électrique intermittente G qui peut être un générateur de courant ou un générateur de tension, tel qu'une pile photovoltaïque, voire un générateur électrique alternatif entraîné par exemple par un mouvement mécanique. Cette source G est de préférence connectée à un régulateur 2 connecté aux bornes d'alimentation $V_{DD}$ et GND, le régulateur 2 égalisant la tension de sortie $V_{DD}$.

Ces circuits bien connus des spécialistes ne seront pas détaillés ici. On mentionnera simplement qu'un régulateur 2 classique comporte un condensateur 3 et éventuellement une diode de redressement 4, ou une diode empêchant un retour de courant vers la source. Les bornes $V_{DD}$ et GND constituent ici la sortie d'alimentation. Des circuits consommateurs de puissance électrique, tel qu'un moteur ou des circuits électroniques de régulation du mouvement de la pièce d'horlogerie sont reliés à ces bornes $V_{DD}$ et GND. Le condensateur 3 fonctionne comme source d'alimentation principale des circuits/moteurs qui sont reliés à ces bornes $V_{DD}$ et GND car l'énergie engendrée par la source électrique intermittente G est stockée, dans une premier temps, à travers ses armatures.

Le circuit d'alimentation continue 1 comporte en outre un convertisseur 5 couplé à des moyens 6 de stockage d'énergie de réserve, constitués par un condensateur C. Le convertisseur 5 est couplé en parallèle au condensateur 3 par des bornes $B_0$ et $B_1$.

En régime normal la source électrique intermittente G et, le cas échéant, la diode 4 fournissent de la puissance électrique au condensateur 3 à destination du circuit consommateur. Le convertisseur 5 dérive une partie de cette puissance électrique et la transfère aux moyens de stockage 6. L'énergie électrostatique stockée dans le condensateur C augmente alors. En régime normal, le convertisseur 5 est de préférence un convertisseur tension continue-tension continue élévateur de tension. Ainsi la faible tension continue $V_1 = V_{DD}$ - GND utilisée couramment dans les pièces d'horlogerie pour alimenter les circuits à faible consommation, pourra être élevée à une tension $V_2$ relativement élevée correspondant à une énergie stockée évaluée à $E = 1/2.C.V_2^2$ ce qui permet de disposer d'une autonomie plus élevée que si l'on accumule de l'énergie dans une capacité à la tension $V_{DD}$ ($E = 1/2.C.V_{DD}^2$).

En régime de secours, lorsque la source électrique intermittente G est défaillante, il est prévu que l'énergie E stockée par le condensateur C est restituée à l'alimentation 1 par les moyens 5 de conversion électrique. Cette puissance doit être délivrée sensiblement à la tension d'alimentation $V_{DD}$ normale. A cette fin, l'invention prévoit des moyens 5 de conversion réversibles. L'énergie E stockée sous la tension continue $V_2$ de valeur élevée est de préférence reconvertie par les moyens 5 de conversion en une énergie électrique délivrée sous la faible tension $V_1$. En régime de secours, les moyens 5 de conversion réversible comportent donc de préférence un convertisseur tension continue-tension continue réducteur de tension.

On peut prévoir que les moyens de conversion 5 comportent deux circuits de convertisseurs disposés parallèlement, un premier convertisseur fonctionnant dans le sens direct en élévateur de tension lors du régime normal, l'autre convertisseur fonctionnant dans le sens inverse en réducteur de tension lors du régime de secours.

Toutefois, l'invention prévoit que les moyens de conversion 5 comportent de préférence un convertisseur réversible unique, le convertisseur ayant deux configurations correspondant aux deux modes de fonctionnement précités. Le convertisseur 5 comporte à cette fin des moyens de commutation intégrés, de préférence statiques, c'est à dire commutant sans mouvement mécanique, tels que des transistors à effet de champ ou des thyristors. En agissant sur ces moyens de commutation, le schéma électrique du convertisseur est modifié de sorte que le sens et le rapport de conversion électrique sont inversés.

L'invention prévoit en outre des moyens de mesure de la puissance de l'alimentation et des moyens de commande de ces commutateurs statiques. Ces moyens permettent de détecter tout affaiblissement de la puissance d'alimentation et de commander une modification de la configuration du convertisseur 5 pour restituer de l'énergie à l'alimentation. Le mode de réalisation préférée de l'invention illustré à la figure 1 comporte ainsi un convertisseur réversible 5 continu-continu élévateur de tension en sens direct dans un première configuration, des moyens de commutation permettant de donner au convertisseur une seconde configuration dans laquelle il est abaisseur de tension en sens inverse. Dans le sens direct, la tension continue $V_1$ aux bornes $B_0$, $B_1$ du convertisseur 5 réversible, est multipliée en une tension continue $V_2$ aux bornes du condensateur C, la tension $V_2$ ayant une valeur supérieure à la tension $V_1$. Dans le sens inverse, la tension continue $V_2$ aux bornes +, - du condensateur C est divisée en une tension continue $V_1$ fournie aux bornes $B_0$, $B_1$ du convertisseur 5 réversible, la tension $V_1$ ayant alors une valeur inférieure à la tension $V_2$.

Le circuit du convertisseur 5 réversible de la figure 1 comporte, par exemple, au moins une inductance L et un circuit de commutation comportant quatre commutateurs statiques $T_1$, $T_2$, $T_3$, $T_4$ et une diode D. Le circuit de commutation a la forme de lettre latine "A". Une des extrémités $B_2$ de l'inductance L est reliée à une borne $B_3$ par le commutateur statique $T_3$, la borne $B_3$ étant reliée à une borne "-" du condensateur C par le commutateur $T_1$. De plus, l'extrémité $B_2$ de l'inductance L est reliée à une borne $B_4$ par un commutateur statique $T_4$, la borne $B_4$ étant reliée à une borne "+" du condensateur C par le commutateur $T_2$. La diode D relie les bornes $B_3$ et $B_4$, la cathode de la diode étant orientée vers la borne $B_4$. Enfin la borne "-" du condensateur C est reliée à la borne $B_0$ du convertisseur 5, la borne $B_1$ étant constituée par l'autre extrémité $B_1$ de l'inductance L. On notera que l'inductance L est connectée en série avec le circuit de commutation 5 entre la borne $B_1$ et la borne "+" du condensateur C.

Conventionnellement, la borne $B_0$ étant reliée à la masse GND, son potentiel est considéré comme nul. Dans la suite du texte on considérera de plus que la source fournit une tension $V_1$ positive c'est à dire que le potentiel de la borne $B_1$ est positif. En fonctionnement, le convertisseur 5, selon le mode de réalisation de la figure 1, fournit alors une tension $V_2$ positive aux bornes du condensateur C, c'est-à-dire que le potentiel de la borne "+" est positif.

Les commutateurs statiques $T_1$, $T_2$, $T_3$, $T_4$ sont de préférence des transistors à effet de champ ou, plus particulièrement, des transistors MOS du type p ou du type n réalisés en technologie CMOS. Ils reçoivent respectivement un signal de commande s1, s2, s3, s4 sur leur grille. A la figure 1, pour la commodité de l'exposé, les commutateurs sont représentés sous forme de transistors à canal P, c'est-à-dire que le canal est passant si le signal de commande appliqué à la grille est dans l'état "0", c'est-à-dire que la tension de grille est plus basse que la tension de source de ces transistors à effet de champ. D'autres variantes de commutateur bien connues des spécialistes peuvent être utilisées sans sortir du cadre de l'invention.

Dans la première configuration, le commutateur $T_4$ est ouvert et les commutateurs $T_3$ et $T_2$ sont fermés. Enfin le commutateur $T_1$ est alternativement fermé puis ouvert. Par exemple, les transistors $T_4$, $T_3$, $T_2$, $T_1$ à canal P illustrés à la figure 1 reçoivent respectivement :

- un signal de grille s4 à l'état "1";
- un signal de grille s3 à l'état "0";
- un signal de grille s2 à l'état "0", et
- sur la grille du transistor $T_1$ un signal s1 d'impulsions variant de l'état "0" à l'état "1".

Dans cette configuration le schéma du convertisseur est équivalent à celui de la figure 2, le commutateur $T_1$ commandé par impulsion correspondant à l'interrupteur $K_1$. Ce dernier est alternativement fermé puis ouvert par une commande dite de "découpage" analogue au signal de commande s1. Quand l'interrupteur $K_1$ est fermé, la tension $V_{in}$ visible à la figure 1, correspondant à la tension $V_1$ visible à la figure 2, est appliquée à l'inductance L de sorte que le courant $I_{in}$ augmente dans cette inductance. L'ouverture de l'interrupteur $K_1$ force le courant $I_{in}$, qui ne peut pas être discontinu dans une inductance, à charger le condensateur C à travers la diode D. La diode D empêche la décharge du condensateur C pendant la fermeture de l'interrupteur $K_1$ lors du cycle de "découpage" suivant. A chaque cycle de fermeture-ouverture de l'interrupteur $K_1$ le condensateur C reçoit une charge supplémentaire ce qui augmente sa tension $V_{out}$ correspondant à $V_2$ sur la figure 2. On notera surtout que cette configuration de hacheur parallèle est élévatrice de tension, le rapport des tensions de sortie $V_{out}$ et de tension d'entrée $V_{in}$ étant multiplié, selon l'équation suivante :

$$\frac{V_{OUT}}{V_{IN}} = \frac{V2}{V1} = \frac{1}{1-f}$$

où f est le taux de fermeture de l'interrupteur $K_1$, (respectivement du commutateur $T_1$), c'est-à-dire que f est le rapport de la durée de fermeture par la durée du cycle fermeture-ouverture.

Dans la seconde configuration, les commutateurs $T_4$ et $T_1$ sont fermés, et le commutateur $T_3$ est ouvert. Enfin le commutateur $T_2$ est alternativement fermé puis ouvert. Par exemple, les transistors $T_4$, $T_3$, $T_2$, $T_1$ à canal P illustrés à la figure 1 reçoivent respectivement :

- un signal de grille s4 à l'état "0";
- un signal de grille s3 à l'état "1";
- sur la grille du transistor $T_2$ un signal s2 d'impulsions variant de l'état "0" à l'état "1", et
- un signal de grille s1 à l'état "0".

Dans cette seconde configuration le schéma du convertisseur est équivalent à celui de la figure 3, le commutateur T2 commandé par impulsions correspondant à l'interrupteur K2. Ainsi, le convertisseur réversible de la figure 1 est utilisé selon la présente invention pour reconvertir de la puissance électrique dans le sens inverse allant du condensateur C vers le condensateur 3. Il convertit ainsi l'énergie électrostatique stockée dans le condensateur C sous la tension continue $V_2$ en une énergie électrique sous la tension continue $V_1$ pour l'alimentation électrique continue.

En effet, dans la seconde configuration du convertisseur réversible selon l'invention, le commutateur $T_2$, correspondant à l'interrupteur $K_2$ de la figure 3, est alternativement ouvert ou fermé par la commande s2. La commande s2 est analogue à la "commande de découpage" précitée, les commandes s1 et s2 pouvant être interverties lors des changements de configurations. Dans la seconde configuration, lorsque le commutateur $T_2$ correspondant à l'interrupteur $K_2$ de la figure 3, est fermé le condensateur C se décharge à travers l'inductance L avec une courant de décharge $i_2$ qui fournit de l'énergie au condensateur 3. Le courant $i_2$, illustré aux figures 1 et 3, provoque une chute de potentiel en traversant l'inductance L de sorte que la tension $V_1$ entre les bornes $B_1$ et $B_0$ du convertisseur 5, a une valeur plus faible que la tension $V_2$ aux bornes du condensateur C. Quand le commutateur $T_2$ analogue à l'interrupteur $K_2$ de la figure 3, est ouvert, un courant $i_2$ continue de circuler dans la diode D, l'inductance L et le condensateur 3.

On notera que dans la seconde configuration, selon les conventions des figures 1 et 3, le courant $i_2$ et la tension $V_1$ sont positifs de sorte que le convertisseur 5 est générateur de puissance électrique destinée à l'alimentation. Dans la première configuration, le convertisseur 5 est au contraire consommateur de puissance électrique puisque la tension $V_1$ et le courant $i_1$ sont positifs selon la convention de la figure 1 (le courant $i_1$ est de sens opposé au courant $i_2$).

On notera surtout que, dans cette seconde configuration de hacheur série, le convertisseur abaisse la tension, le rapport de la tension continue $V_2$ aux bornes du condensateur et de la tension continue $V_1$ aux bornes du convertisseur 5 étant divisé selon l'équation suivante :

$$\frac{V1}{V2} = f$$

où f est le taux de fermeture du commutateur $T_2$ (ou de l'interrupteur $K_2$) c'est à dire le rapport de la durée de fermeture par la durée du cycle fermeture-ouverture dans la seconde configuration.

Les valeurs de rapport de multiplication et de division des tensions continues indiquées précédemment sont toutefois indicatives. Si l'on désire obtenir une tension d'alimentation $V_{DD}$ de valeur précise, il sera préférable de prévoir que le taux de fermeture f des commutateurs $T_1$ et $T_2$ soit asservi à une mesure de la valeur de la tension $V_{DD}$ en sortie du régulateur ou de la tension $V_1$ aux bornes du convertisseur 5.

Cette mesure peut être avantageusement combinée avec la mesure de la puissance électrique de l'alimentation ou de la source qui commande la modification de la configuration du convertisseur réversible.

Un exemple de réalisation, strictement indicatif de circuits de commande des moyens de commutation va maintenant être décrit en référence à la figure 1. Le circuit de commande 7 comporte des moyens de mesure Cmp de la puissance électrique fournie par la source et des moyens de commande, par exemple un générateur d'impulsions H et un circuit logique, reliés au commutateur $T_1$, $T_2$, $T_3$, $T_4$ du convertisseur 5. Le fonctionnement du circuit logique de la figure 1 sera décrit à titre d'exemple, en considérant d'abord que la tension d'alimentation $V_{DD}$ est suffisante. La tension $V_1$ étant alors élevée la sortie du comparateur Cmp est dans un état "1".

- Le signal s4, obtenu directement, est dans un état "1";
- le signal s3, obtenu en sortie d'un inverseur, est dans un état "0";
- le signal s2, obtenu en sortie d'une porte &2 effectuant l'opération ET logique entre le signal s3 et le signal d'impulsions H, est dans un état "0", et
- le signal s1, obtenu en sortie d'une porte &1 effectuant l'opération ET logique entre le signal s4 et le signal du générateur d'impulsions H, recopie le signal d'impulsions H.

Le circuit de commande 7 dispose donc le convertisseur 5 dans la première configuration.

Lorsque la source est défaillante ou que les circuits électroniques de la pièce d'horlogerie consomment trop de puissance électrique, la tension d'alimentation $V_{DD}$ devient insuffisante. La tension $V_1$ est donc faible et la sortie du comparateur Cmp passe à un état "0".

- Le signal s4 obtenu directement est dans un état "0";
- le signal s3, obtenu en sortie d'un inverseur, est dans un état "1";
- le signal s2 recopie le signal d'impulsion H; et,
- le signal s1 est dans un état "0".

Lorsque la source est défaillante, le circuit de commande 7 dispose donc le convertisseur 5 dans la seconde configuration.

Selon une variante non illustrée, les moyens de commande 7 peuvent de façon avantageuse contrôler le taux de fermeture f du commutateur $T_1$ ou $T_2$ (selon la configuration). Le circuit de commande 7 peut par exemple comporter un générateur d'impulsions H de largeur variable. Dans la seconde configuration, la largeur des impulsions peut être ainsi contrôlée par les moyens de mesure de la tension $V_1$ délivrés par le convertisseur 5. On évite ainsi que les variations de l'énergie E et de la tension $V_2$ du condensateur C lors de sa décharge, ne se répercutent sur les tensions $V_1$ et $V_{DD}$. Dans la première configuration, on peut aussi prévoir une mesure de la tension $V_2$ de charge du condensateur C, la mesure contrôlant le taux de fermeture f du commutateur $T_1$, de sorte que le taux f augmente au fur et à mesure de la charge du condensateur. On évite ainsi que les composants du convertisseur 5 ne soient soumis à de très forts courants et/ou tensions.

On mentionnera encore que la commande du convertisseur 5 peut comporter trois phases, deux phases correspondant aux configurations précitées, le convertisseur étant en fonctionnement en sens direct ou en sens inverse, et la phase supplémentaire correspondant au non-fonctionnement du convertisseur. Dans cette phase de non-fonctionnement, le convertisseur ne transmet aucune puissance électrique, ni dans le sens direct vers le condensateur C ni dans le sens inverse vers l'alimentation 1. Le convertisseur peut être simplement déconnecté, les commutateurs $T_1$ et $T_2$ étant ouverts (signaux de commande s1 et s2 à l'état "0"). Ainsi le condensateur C conserve l'énergie E qu'il a déjà stockée. Cette phase peut s'intercaler entre le passage d'une configuration à une autre pour éviter des problèmes de commutation. Plus généralement cette phase peut être commandée lorsque la puissance de la source G est suffisante pour alimenter les circuits électroniques de la pièce d'horlogerie mais que cette puissance est trop faible pour alimenter en outre le convertisseur 5 et le condensateur C.

Un avantage du circuit d'alimentation électrique continue selon l'invention est que le convertisseur 5 peut utiliser la même inductance L et la même diode D dans ces deux configurations. En particulier dans une application pour pièce d'horlogerie, l'inductance L peut être un enroulement d'un moteur inductif comme un moteur pas à pas. En ce cas, un autre avantage du circuit d'alimentation électrique continue selon l'invention se présente, à savoir que les transistors T1 à T4 peuvent être réalisés par des transistors de contrôle de moteur-horloger. On réalise ainsi avantageusement un circuit d'alimentation électrique continue de faibles dimensions qui nécessite un nombre minimal de composants.

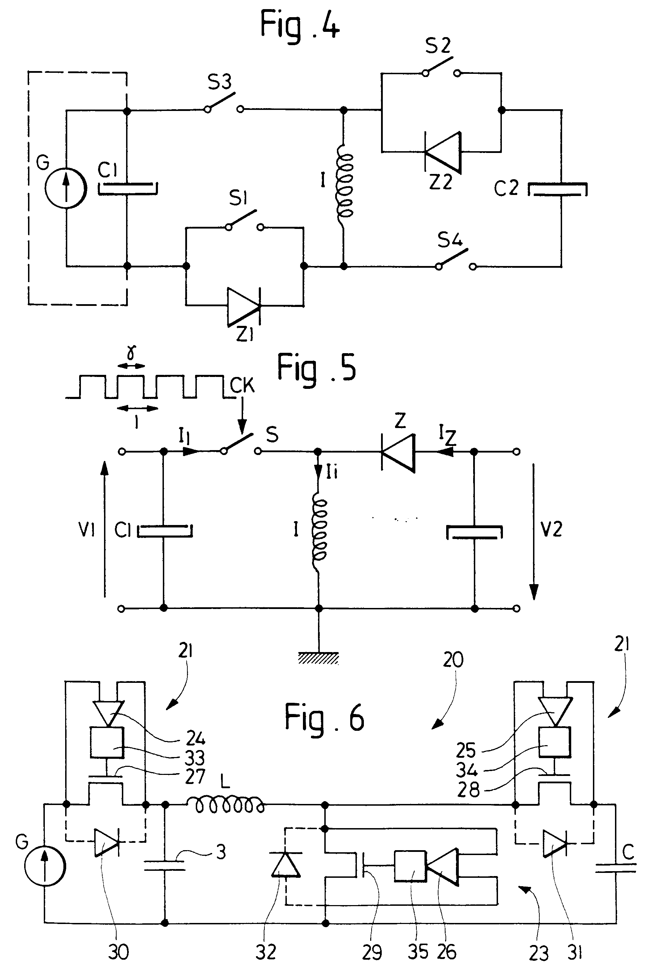

D'autres modes de réalisation de convertisseurs continu-continu réversibles peuvent être envisagés. Un deuxième mode de réalisation, illustré à la figure 4, comporte un convertisseur couplé d'une part à un condensateur C1 qui peut être le condensateur du régulateur 2 de l'alimentation 1 et d'autre part à un condensateur de stockage C2.

Dans ce deuxième mode de réalisation, le convertisseur a la forme de la lettre latine "H", les pieds du "H" étant connectés aux bornes du condensateur C1, les pointes du "H" étant connectées aux bornes du condensateur C2. L'inductance L forme ici la barre du "H". Quatre commutateurs statiques $S_1$, $S_2$, $S_3$, $S_4$ sont disposés dans un montant respectif du "H". Le circuit comporte en outre deux diodes Z1, Z2, disposées respectivement dans un montant supérieur du "H" et dans un montant inférieur du "H", chaque diode étant connectée en parallèle d'un commutateur, par exemple S1, S2 respectivement.

Comme dans le mode de réalisation préféré, ce deuxième convertisseur réversible peut avoir deux configurations. Dans la première, il convertit la tension $V_1$ disponible aux bornes du condensateur C1 en une tension $V_2$ appliquée au condensateur C2. Dans la seconde configuration, il reconvertit l'énergie E stockée dans le condensateur C2 sous la tension $V_2$ en une puissance électrique restituée au condensateur C1 et à l'alimentation 1 sous la tension $V_1$.

Dans ce deuxième mode de réalisation, les moyens de commutation S1, S2, S3, S4 configurent le convertisseur en hacheur à accumulation inductive. Ce hacheur comporte un commutateur S connecté en série avec une diode Z entre la borne "+" du condensateur C1 et une borne "-" du condensateur C2, l'anode de la diode Z étant connectée à la borne "-" du condensateur C2. La borne "-" du condensateur C1 et la borne "+" du condensateur C2 sont reliées par un fil, formant de préférence fil de masse. L'inductance L est connectée entre la cathode de la diode Z et le fil de masse. Le circuit du hacheur forme donc un "H".

En fonctionnement, le commutateur S est fermé puis ouvert par un signal d'impulsion CK appelé "commande de découpage". Cette configuration de hacheur a la propriété d'être abaisseur ou élévateur de tension selon le taux de fermeture f du commutateur S. Le rapport de la tension de sortie $V_2$ à la tension d'entrée $V_1$, tel que visible à la figure 5, est en effet donné par l'équation suivante:

$$\frac{V2}{V1} = \frac{f}{1\text{-}f}$$

Dans ce deuxième mode de réalisation, le convertisseur est rendu réversible en inversant simplement sa configuration. La commande des commutateurs S1, S2, S3, S4 est similaire à la commande des quatre commutateurs du mode de réalisation préféré. On mentionnera toutefois que dans la première configuration, le convertisseur de la figure 4 correspond au hacheur à accumulation inductive de la figure 5, hacheur qui convertit la tension $V_1$ en la tension $V_2$ dans le sens direct. Dans la seconde configuration, on voit sur la figure 4 que le convertisseur peut prendre une configuration symétrique de hacheur à accumulation inductive dans le sens inverse, la tension $V_2$ étant reconvertie en tension $V_1$. Dans ce mode de réalisation, le convertisseur a une première configuration et une deuxième configuration semblable car on peut élever la tension dans le sens direct avec un taux de fermeture f supérieur à 1/2 et on peut abaisser la tension dans le sens inverse avec un taux de fermeture inférieur à 1/2. On obtient ainsi un stockage d'énergie E sous tension V2 élevée dans un condensateur C2 selon l'invention.

Dans un autre mode de réalisation, le ou les diodes susmentionnées peuvent être remplacées par des diodes actives, c'est-à-dire des diodes qui comportent au moins un élément actif, tel qu'un amplificateur opérationnel, un comparateur, un transistor ou élément similaire, qui nécessite une source d'alimentation.

A cet effet, la figure 6 représente un schéma d'un circuit d'alimentation continue 20 comprenant la source électrique intermittente G, le condensateur 3, l'inductance L et le condensateur C susmentionnés. Le circuit d'alimentation continue 20 comprend en outre des diodes actives 21, 22 et 23.

Les diodes actives 21, 22 et 23 comportent respectivement des comparateurs 24, 25 et 26 ainsi que des transistors à effet de champ 27, 28 et 29. Chacune de ces diodes actives fonctionne de manière identique. Prenons le cas de la diode active 21, l'entrée positive et l'entrée négative du comparateur 24 sont reliées aux drain et source du transistor à effet de champ 27. La sortie du comparateur 24 est reliée à la grille du transistor 27.

Or, il est connu qu'une diode parasite est créée lorsqu'un transistor à effet de champ est diffusé dans un substrat, cette diode parasite étant effectivement reliée entre la source et le drain du transistor à effet de champ. Ainsi, les diodes actives 21, 22 et 23 comporte en outre des diodes parasites telles que référencées 30, 31 et 32 sur la figure 6.

Lors du démarrage, c'est-à-dire lorsqu'un courant est fourni à la diode active 21 pour la première fois, ce courant passe par la diode parasite. Ceci engendre une chute de tension à travers la diode active 21 qui peut être de l'ordre de 650 mV. Cette chute de tension est détectée aux entrées du comparateur 24. En conséquence, le comparateur 24 applique un signal de commande sur la grille du transistor 27 de manière que ce dernier est rendu conducteur et que la diode parasite 30 est court-circuitée. Ceci provoque une baisse de la tension résiduelle à travers la diode active 21, par exemple, d'environ 650 mV à 50 mV. La diode active 21 reste conducteur pour autant qu'il y a du courant qui lui est fourni, dans ce cas par la source électrique intermittente G.

Le circuit d'alimentation continue 20 de la figure 6 comporte en outre des circuits de commande 33, 34 et 35 reliés respectivement entre la sorte du comparateur 24 et la grille du transistor 27, entre la sorte du comparateur 25 et la grille du transistor 28 et entre la sorte du comparateur 26 et la grille du transistor 29. Ces circuits logiques sont agencés à décider, en fonction d'éléments ou phénomènes externes (par exemple les moyens de commande 7) si les diodes actives 21, 22 et 23 sont utilisées comme des diodes proprement dit ou si les transistors 27, 28 ou 29, faisant parties de ces diodes active, sont utilisés plutôt comme des transistors de commutation.

Grâce à ces circuits de commande, le circuit d'alimentation continue 20 peut être configuré soit selon le schéma de la figure 2, soit selon le schéma de la figure 3. En effet, si le circuit de commande 35 applique une série d'impulsions à la grille du transistor 29 de manière que ce dernier fonctionne comme le commutateur K1 décrit ci dessus, on voit que le circuit d'alimentation continue 20 adopte la configuration représentée à la figure 2. De même, si le circuit de commande 34 applique une série d'impulsions à la grille du transistor 28 de manière que ce dernier fonctionne comme le commutateur K2 décrit ci-dessus, on voit que le circuit d'alimentation continue 20 adopte la configuration représentée à la figure 3.

Avantageusement, un tel agencement permet de minimiser le nombre d'éléments non-intégrables du circuit d'alimentation continue car des diodes externes ne sont plus nécessaires. En outre, cet agencement permet de réduire considérablement les pertes de tension inutiles du circuit d'alimentation continue.

D'autres configurations de convertisseurs réversibles peuvent être réalisées, un grand nombre de variantes étant connues des spécialistes, comme cela ressort de la lecture de l'exposé précédent.

## Revendications

1. Circuit d'alimentation continue notamment d'une pièce d'horlogerie, comportant :

   - une source d'alimentation (3) dudit circuit électronique destinée à stocker de l'énergie pour alimenter ce dernier;
   - une source électrique intermittente (G) destinée à fournir de l'énergie à ladite source d'alimentation caractérisé en ce que ledit circuit d'alimentation comprend en outre :
   - des moyens (6) de stockage d'énergie de réserve destinés à fournir de l'énergie à ladite source d'alimentation (3) lorsque ladite source électrique intermittente (G) ne fournit pas de l'énergie à ladite source d'alimentation; et
   - un convertisseur électrique continu-continu réversible (5), couplé d'une part à ladite source d'alimentation (3), d'autre part aux moyens de stockage d'énergie de réserve (6), le convertisseur comportant des moyens $(T_1,T_2,T_3,T_4)$ de commutation, et des moyens (7) de commande qui agissent sur lesdits moyens de commutation de manière que la configuration dudit convertisseur soit modifiée entre une première configuration dans laquelle ledit convertisseur (5) transfère, en sens direct, de l'énergie provenant de la source électrique intermittente (G) aux moyens de stockage d'énergie de réserve (6), et une deuxième configuration dans laquelle le convertisseur (5) restitue, en sens inverse, l'énergie stockée par les moyens (6) de stockage d'énergie de réserve à ladite source d'alimentation.

2. Circuit d'alimentation selon la revendication 1, caractérisé en ce que ledit convertisseur (5) est un convertisseur tension continue-tension continue, et en ce que lesdits moyens (7) de commande agissent sur lesdits moyens $(T_1,T_2,T_3,T_4)$ de commutation de manière que ledit convertisseur soit élévateur de tension dans ladite première configuration, et abaisseur de tension dans ladite deuxième configuration.

3. Circuit d'alimentation selon l'une quelconque des revendications 1 ou 2, caractérisé en ce que lesdits moyens (7) de commande agissent sur lesdits moyens $(T_1,T_2,T_3,T_4)$ de commutation de manière que ledit convertisseur (5) soit un hacheur série dans ladite première configuration, et ledit convertisseur soit un hacheur parallèle dans ladite deuxième configuration.

4. Circuit d'alimentation selon l'une quelconque des revendications 1 ou 2, caractérisé en ce que le convertisseur (5) est un hacheur à accumulation inductive dans chacune desdites configurations, et en ce que lesdits moyens de commande (7) sont agencés de manière à régler le taux de découpage du hacheur pour que le convertisseur (5) soit élévateur de tension dans ladite première configuration, et que ledit convertisseur soit abaisseur de tension dans ladite deuxième configuration.

5. Circuit d'alimentation selon l'une quelconque des revendications précédentes, caractérisé en ce que le convertisseur (5) comporte une inductance (L) d'accumulation dans chacune des configurations, la même inductance étant mise en oeuvre dans ladite première et ladite deuxième configuration.

6. Pièce d'horlogerie caractérisée en ce qu'elle comporte un circuit d'alimentation selon l'une quelconque des revendications 1 à 5.

7. Pièce d'horlogerie à mouvement entraînée par un moteur électrique à induction, tel qu'un moteur pas à pas, et comportant un circuit d'alimentation selon l'une quelconque des revendications 1 à 5, caractérisée en ce qu'au moins une inductance (L) du hacheur est une inductance du moteur.

8. Pièce d'horlogerie selon l'une quelconque des revendications 6 ou 7, caractérisée en ce que la source électrique continue intermittente (G) comporte une pile photovoltaïque.

# Fig . 2

# Fig .1

# Fig . 3

# Fig .4

# Fig .5

# Fig . 6